# EUROPÄISCHE PATENTANMELDUNG

(11) **EP 2 552 096 A1**
(43) Veröffentlichungstag der Anmeldung: **30.01.2013**
(21) Anmeldenummer: 12005399.6
(22) Anmeldetag: 25.07.2012
(51) Int. Cl.: H04N 1/58, H04N 1/32

(54) **Schutzelement zur Sicherung von Druckschriften, insbesondere für digitalen Druck**

(30) Priorität: 25.07.2011 CZ 20110451
(71) Anmelder: DaveTon consulting company, s.r.o., 14200 Praha 4 (CZ)
(72) Erfinder: Antonin, Korynta, 25245 Ohrobec (CZ); Herman, David, 44001 Louny 1 (CZ)
(74) Vertreter: Chlustina, Jiri

(57) **Zusammenfassung**

Die Lösung betrifft ein Schutzelement zur Sicherung von Druckschriften, insbesondere für digitalen Druck, das aus einer Anordnung von einzelnen mit verschiedenen Graustufen gedruckten Druckfeldern gebildet wird. Ein definierter Teil von Druckfeldern durch den mittels der durch die Graustufen gedruckten Farbpasser der Grunddruckfarben cyan, magenta, yellow und black (bzw. der dunkleren grauen Abstufung cyan, magenta, yellow und black) gedruckt wird, während der gebliebene Teil durch die nur aus einer schwarzen Druckfarbe gebildeten Grauabschattungen gedruckt wird. Das auf diese Weise gedruckte Schutzelement erscheint in dem sichtbaren Bereich des Spektrums als aus verschiedenen Graustufen hergestellt, während in dem IR-Bereich des Spektrums ein Unterschied erkennbar ist, der auf verschiedene Absorption der Farben cyan, magenta, yellow und black zurückzuziehen ist.

## Beschreibung

### Technisches Gebiet

Die Erfindung betrifft ein Schutzelement zur Sicherung von Druckschriften, insbesondere für digitalen Druck, das aus einer Anordnung von einzelnen mit verschiedenen Graustufen gedruckten Druckfeldern gebildet wird und für die Sicherung von Druckschriften und Schriftstücken in der polygraphischen Industrie bestimmt ist, für deren Drucken die Grund(prozess)farben cyan, magenta, yellow and black (CMYK) benutzt worden sind.

### Stand der Technik

Polygraphische Industrie, sei es sich um die klassischen Drucktechniken, wie Hochdruck, Litographie und Tiefdruck und/oder um das moderne digitale Drucken handelt, benutzt zum Drucken von farbigen Reproduktionen folgende vier Grund(prozess)druckfarben: cyan, magenta, yellow und black (CMYK), die auch als Himmelsblau, Purpur, Gelb und Schwarz bezeichnet werden.

Das o.a. bedeutet, dass sowohl beim Drucken von farbigen Reproduktionen, als auch beim Drucken von Graustufen ein Farbpasser von Druckfarben CMY, im Falle von einer dunkleren Abstufung wird auch ein Farbpasser von Druckfarben CMYK benutzt. Im Gegensatz, beim Drucken von einfarbigen schwarzen Reproduktionen wird zum Drucken von grauer Abstufung nur schwarze Farbe benutzt.

Mittels dieser einzelnen separaten Verfahren zum Drucken von grauen Abstufungen wird bei eventueller Reproduktion nicht die Schutzwirkung des Schriftstücks erzielt. Das bedeutet, dass im Falle eines Erfordernisses auf Feststellung der Echtheit des Schriftstücks oder des Dokuments eine komplizierte mikroskopische Prüfung und Vergleich nötig sind. Mit Rücksicht darauf werden daher für Sicherung von Schriftstücken gegen Verfälschung verschiedene Schutzelemente benutzt, wie zum Beispiel die auf UV-Strahlung im elektromagnetischen Spektrum im Bereich 200 - 380 nm reagierenden UV-Farben, und auf die auf IR-Strahlung im elektromagnetischen Spektrum im Bereich 780 - 1400 nm reagierenden IR-Farben, bzw. die in einer Papiermasse angewandten Schutzelemente oder erst nach der Fertigstellung des Schriftstücks/des Dokuments angewandten Schutzelemente. Die oben angeführten Vorkehrungen zur Sicherung von Schriftstücken erhöhen unangemessen die Herstellungskosten auf die Schriftstücke und gewissermaßen auch die Umwelt belasten, was letzten Ende auch die Gesamtkosten auf die Druckschriften beeinflusst.

Erfahrungsgemäß und der Praxis nach ist ersichtlich, dass das am meisten verwendete Verfahren der Verfälschung ein einfaches Kopieren des Schriftstücks ist. Der Verfälscher befasst sich nicht mit der Herstellung des Schriftstücks von Grund auf, sondern er versucht das Grundbild/Motiv des Schriftstücks auf handelsüblichen Reproduktionsanlagen zu kopieren und gegebenenfalls den Kenntnissen nach die verfälschten Schutzelemente zu ergänzen, wie z.B. ein Fensterstreifen, ein Hologramm u.ä. ist. Es besteht also ein Erfordernis auf ein neues Schutzelement, das nach seiner Anwendung auf ein beliebiges Schriftstück dessen getreues Kopieren unmöglich macht und das Schutzelement nach seinem Kopieren seine optischen Eigenschaften ändert. Eine unbestreitbare Eigenschaft dieses Schutzelements sollte seine Nutzbarkeit und Möglichkeit des Druckens mittels einer beliebigen digitalen Druckvorrichtung sein. Zugleich wird die Möglichkeit einer einfachen Detektion mittels schon handelsüblichen optischen Anlagen erwartet.

Die Aufgabe der vorliegenden Erfindung ist die Schaffung eines neuen Schutzelements, das auf den am meisten verbreiteten, auf dem Prinzip von digitalen Drucken arbeitenden Einrichtungen, d.h. NIP-Non Impact Printing, im Regime des vierfarbigen Druckens herstellbar ist. Das bedeutet, dass beim Drucken nur vier Grund/Prozessfarben cyan, magenta, yellow und black (CMYK) benutzt werden. Bei diesem Druckverfahren können nicht, wie bei den konventionellen Drucktechnologien, außer der Grundfarben, auch direkte oder andere Farben benutzt werden, wie zum Beispiel die UV- oder IR-Farben und ähnlich sind.

### Wesen der Erfindung

Die Aufgabe wird durch ein Schutzelement zur Sicherung von Druckschriften, insbesondere für den digitalen Druck, das aus einer Anordnung von einzelnen mit verschiedenen Graustufen gedruckten Druckfeldern gebildet wird, dadurch gelöst, dass ein bestimmter Teil von Druckfeldern durch den mittels der durch die Graustufen gedruckten Farbpasser der Grunddruckfarben cyan, magenta, yellow and black (bzw. der dunkleren grauen Abstufung cyan, magenta, yellow and black) gedruckt wird, während der gebliebene Teil durch die nur aus einer schwarzen Druckfarbe gebildeten Grauabschattungen gedruckt wird.

Das neue Schutzelement besteht also aus einer Anordnung von separaten Druckfeldern/Zellen, die durch verschiedene Abschattungen der grauen Farbe gefüllt sind. Das Wesen des auf diese Weise hergestellten Schutzelements/Druckmusters besteht darin, dass ein genau bestimmter Teil der Druckfelder teilweise mittels einer grauen, durch einen Farbpasser der CMY-Farben, bzw. der dunkleren CMYK-Abschattungen, gebildete Abschattung gefüllt/gedruckt wird, während der übrigbleibende Teil der Druckfelder durch die aus der schwarzen Farben hergestellten grauen Abschattungen gefüllt/gedruckt wird. Auf diese Weise wird erzielt, dass die einzelnen verschieden grauen Felder einen anderen Verlauf in dem IR-Bereich des Spektrums aufweisen. Wie schon erwähnt wurde, werden die Graustufen bei einem vierfarbigen Regime des Druckens durch den Farbpaser der CMY-Farben, bzw. der CMYK-Farben gedruckt, während bei einem einfarbigen Regime des Druckens die Graustufen nur mittels der schwarzen Farbe gedruckt werden. Es wurde darum solche Lösung entwickelt, die das Drucken von verschiedenen Graustufen mittels der beiden Verfahren gleichzeitig ermöglicht, wobei gleichzeitig auch das Drucken der gewünschten Druckschrift erfolgt. Das Schutzelement entsteht auf diese Weise zusammen mit der Druckschrift während des einen Herstellungsprozesses, wodurch komplizierte, zeitraubende und aufwändige Technologien zwecks einer anderen Versicherung der Druckschriften entfallen. Die Schutzwirkung des auf diese Weise hergestellten Schutzelements erhält neue einzigartige unnachahmliche Eigenschaften, die einfach in dem IR-Bereich des Spektrums feststellbar sind, weil bei dem Kopieren des Schutzelements eine Änderung der ursprünglichen Information bezüglich der Farbe (eine Änderung der optischen Eigenschaften) erfolgt, die von der Technologie der benutzten Reproduktionsvorrichtung abhängig ist, d.h. ob diese in dem vierfarbigen oder nur einfarbigen Druckregime arbeitet. Allgemein kann festgestellt werden, dass beim Kopieren eines grauen Musters auf einer Reproduktionsvorrichtung in einem vierfarbigen Regime des Druckens eine Änderung der durch nur schwarze Farbe gebildeten grauen Abschattungen auf die durch CMY-, bzw. CMYK-Graustufen gebildeten Abschattungen erfolgt. Beim Kopieren des Musters in einem einfarbigen Druckregime erfolgt eine Änderung der durch den Farbpasser von CMY-, bzw. CMYK-Farben, gebildeten Graustufen auf nur durch die schwarze Farbe gebildeten Graustufen.

In dem sichtbaren Bereich des Spektrums erscheint das Schutzelement als ein aus verschiedenen Graustufen zusammengesetztes Muster, während in dem IR-Bereich die Druckfelder abweichende Verläufe der Absorption aufweisen.

Die einzelnen Druckfelder des Schutzelements können eine geometrische Form eines Vierecks, Rechtecks, Dreiecks oder eine andere Form und auch verschiedene Größe aufweisen.

Das Schutzelement kann aus einer beliebigen Anzahl von Druckfeldern bestehen.

Die Kombination der beiden Verfahren zur Herstellung der Graustufen außer verschiedener Mosaiken und Muster kann auch verborgene Texte und andere gewünschte Muster bilden.

Das Schutzelement besteht dabei aus mindestens zwei Teilen, die durch zwei auf eine unterschiedliche Weise hergestellte Graustufen gedruckt werden.

Einen großen Vorteil stellt auch die Möglichkeit des Druckens des Schutzelements zugleich mit dem Hauptdruck der gewünschten Druckschrift vor.

Das Schutzelement kann mittels der digitalen und/oder konventionellen Techniken gedruckt werden.

Das beschriebene Schutzelement kann in der polygraphischen Industrie zur Herstellung von Verpackungen, beim Aufdruck von Plastikkarten, zur Herstellung von Wertsachen, wie die Fahrkarten, Verpflegungskarten, Briefmarken, Aktien und ähnlich benutzt werden, ohne die bestehenden Herstellungsvorrichtungen ergänzen oder ändern zu müssen. Ein weiterer Vorteil des erfindungsgemäßen Schutzelements besteht darin, dass es außer der industriellen Verwendung auch auf die handelsüblichen auf dem Tinten- oder Elektrographischenprinzip, d.h. Laserprinzip, arbeitenden digitalen Druck- und Reproduktionseinrichtungen anwendbar ist. Das bedeutet, dass jeder Inhaber einer solchen Einrichtung sich ein Schriftstück oder Schriftsache gegen Kopieren nach Bedarf versichern und dieses Schutzelement, was dessen graphische Form betrifft, dem Hauptmotiv des Schriftstücks anpassen kann. Für die einfache Anwendung des Schutzelements ist ein Programm entwickelt worden, das eine Bildung eines beliebigen Musters und dessen Einlegung in das Produkt derart ermöglicht, um den Gesamteindruck nicht zu ändern. Der Übersichtlichkeit halber sind die einzelnen Vorteile des Schutzelements, wie folgt, in einigen Punkten zusammengefasst worden:
- beim Drucken dieses Schutzelements brauchen nicht andere Techniken und Farben benutz werden, als die, die zum Drucken von Schriftstücken üblich benutzt werden,
- das Schutzelement kann mittels aller Drucktechniken gedruckt werden,
- die Herstellungskosten werden herabgesetzt,
- das Schutzelement entsteht auf eine ökologische Weise gleichzeitig mit dem Drucken der Schriftstücke,
- das Schutzelement ist einfach wiederverwendbar,
- das Schutzelement kann für den Schutz von Waren und allgemein in der Verpackungsindustrie benutzt werden,
- das Schutzelement kann für alle bedruckbaren Materialien wie Papier, Stoff, Kunststoff und ähnlich benutzt werden,
- das Schutzelement kann für die Geschenkscheine und Aufdrücke auf CD- und DVD-Träger benutzt werden,
- das Schutzelement erhöht wesentlich die Sicherheit und den Schutz von Schriftstücken, wie die Wertsachen, Fahrkarten, Verpflegungskarten, Schriftsachen, Verträge und ähnlich sind,
- das Schutzelement kann zum Kodieren von Waren und von verborgenen Texten und Angaben benutzt werden, die in dem sichtbaren Bereich des Spektrums schlecht lesbar sind,
- das Schutzelement verschiebt die Grenzen der Versicherung von nur mittels der digitalen Techniken, wie das Tinten- und Laserdrucken ist, gedruckten gewöhnlichen Schriftstücken,
- einfache Anwendbarkeit des Schutzelements,
- einfache Identifizierbarkeit des Schutzelements.

### Kurze Beschreibung der Zeichnungen

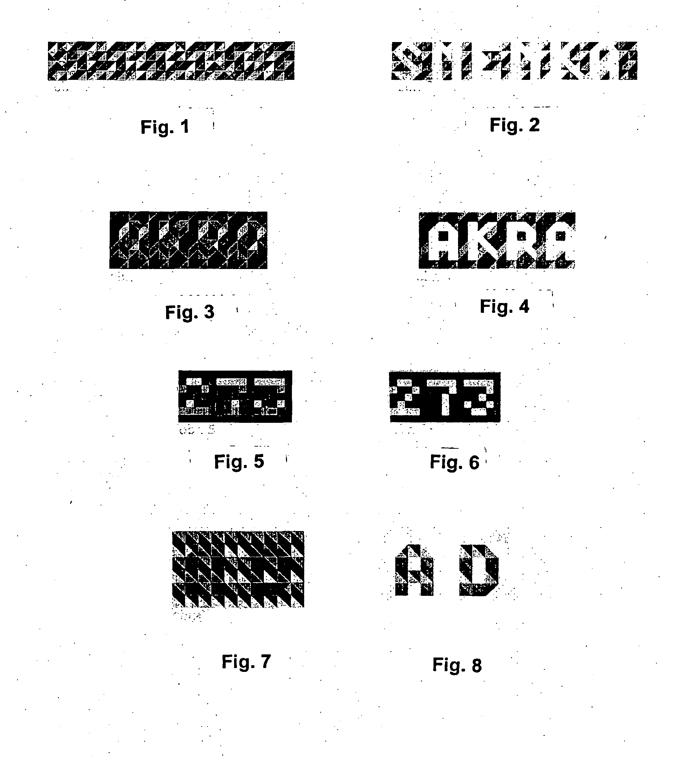

Die Erfindung wird weiter aufgrund der beigefügten Zeichnung näher erläutert, die die möglichen Ausführungen des erfindungsgemäßen Schutzelements zeigt, und zwar bei Beobachtung im sichtbaren Bereich des Spektrums in Fig. 1, 3, 5, 7 und im IR-Bereich des Spektrums in Fig. 2, 4, 6, 8.

### Ausführungsbeispiele der Erfindung

In Fig. 1, 3, 5 und 7 sind schematisch verschiedene Ausführungsbeispiele des erfindungsgemäßen Schutzelements dargestellt. Den vorliegenden Abbildungen ist entnehmbar, dass das erfindungsgemäße Schutzelement aus einer bestimmten Anzahl von Druckfeldern/Zellen besteht, die im Einklang mit dem gewünschten Motiv des gedruckten Musters mittels verschiedener Graustufen gedruckt werden, und zwar derart, dass ein genau definierter Teil des Musters mittels Graustufen, die durch den Farbpasser der CMY- (bzw. CMYK-) Farben gebildet werden, während der übrigbleibende Teil des Musters aus Graustufen besteht, die nur durch die schwarze Farbe gebildet werden.

In Fig. 1 ist ein Original des Schutzelements dargestellt, wie dieses bei Beobachtung mit bloßem Auge im sichtbaren Bereich des Spektrums erscheint, wobei der Text "SM 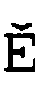 NKA" in dem Schutzelement aus einzelnen Druckfeldern besteht, die aus verschieden Graustufen durch den Farbpasser der CMY-Farben gedruckt wurden. Die benachbarten Druckfelder, die den Hintergrund bilden, wurden aus Graustufen gebildet, die nur aus schwarzer Farbe gewonnen wurden.

In Fig. 2 ist dasselbe Schutzelement wie in Fig. 1 dargestellt, aber in dem IR-Bereich des Spektrums beobachtet, wo der Text "SM 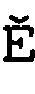 NKA" ein anderes Absorptionsspektrum als der Hintergrund aufweist. Der Text "SM 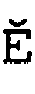 NKA" erscheint hier als Negativ.

In Fig. 3 ist eine weitere mögliche Ausführung des Originals des Schutzelements dargestellt, wie dieses bei Beobachtung mit bloßem Auge in dem sichtbaren Bereich des Spektrums erscheint, wobei der in dem Schutzelement enthaltene Text "AKRA" aus einzelnen Druckfeldern zusammengesetzt ist, die mittels der verschiedenen Graustufen gedruckt worden sind, die aus dem Farbpasser der CMY-Farben entstanden sind. Die benachbarten Druckfelder, die den Hintergrund bilden, wurden aus Graustufen gebildet, die nur aus schwarzer Farbe gewonnen wurden.

In Fig. 4 ist dasselbe Schutzelement wie in Fig. 3 dargestellt, aber in dem IR-Bereich des Spektrums beobachtet, wo der Text "AKRA" ein anderes Absorptionsspektrum als der Hintergrund aufweist. Der Text "AKRA" erscheint hier als Negativ.

In Fig. 5 ist eine weitere mögliche Ausführung des Originals des Schutzelements dargestellt, wie dieses bei Beobachtung mit bloßem Auge in dem sichtbaren Bereich des Spektrums erscheint, wobei die in dem Schutzelement enthaltene Nummer "273" aus einzelnen Druckfeldern zusammengesetzt ist, die mittels der verschiedenen Graustufen gedruckt worden sind, die durch den Farbpasser der CMY-Farben entstanden sind. Die benachbarten Druckfelder, die den Hintergrund bilden, wurden aus Graustufen gebildet, die nur aus schwarzer Farbe gewonnen wurden.

In Fig. 6 ist dasselbe Schutzelement wie in Fig. 5 dargestellt, aber in dem IR-Bereich des Spektrums beobachtet, wo die Nummer "273" ein anderes Absorptionsspektrum als der Hintergrund aufweist. Die Nummer "273" erscheint hier als Negativ.

In Fig. 7 ist eine weitere mögliche Ausführung des Originals des Schutzelements dargestellt, wie dieses bei Beobachtung mit bloßem Auge in dem sichtbaren Bereich des Spektrums erscheint, wobei die in dem Schutzelement enthaltenen Buchstaben "AD" aus einzelnen Druckfeldern zusammengesetzt sind, die mittels der verschiedenen Graustufen gedruckt worden sind, die nur aus schwarzer Farbe gewonnen wurden. Die benachbarten Druckfelder, die den Hintergrund bilden, sind durch den Farbpasser der CMY-Farben entstanden.

In Fig. 8 ist dasselbe Schutzelement wie in Fig. 7 dargestellt, aber in dem IR-Bereich des Spektrums beobachtet, wo die Buchstaben "AD" ein anderes Absorptionsspektrum als der Hintergrund aufweisen. Die Buchstaben "AD" erscheinen hier als Positiv.

Auf diese Weise kann eine unerschöpfliche Möglichkeit des Aussehens und Motivs des Schutzelements geschaffen werden, das aus den Texten, Ziffern, Symbolen, Mustern, Mosaiken und Grafiken bestehen kann, die Dank ihrer Eigenartigkeit in dem sichtbaren Bereich des Spektrums kaum sichtbar sind und in dem IR-Bereich des Spektrums ein negatives oder positives Bild darstellen können. Es geht nur auf das gewünschte Bild an, das sich der Kunde oder Auftragsgeber u.ä. wünscht.

## Patentansprüche

1. Schutzelement zur Sicherung von Druckschriften, insbesondere für digitalen Druck, das aus einer Anordnung von einzelnen mit verschiedenen Graustufen gedruckten Druckfeldern gebildet wird, **dadurch gekennzeichnet, dass** ein definierter Teil von Druckfeldern durch die mittels des durch die Graustufen gedruckten Farbpassers der Grunddruckfarben cyan, magenta, yellow and black (bzw. der dunkleren grauen Abstufung cyan, magenta, yellow and black) gedruckt wird, während der gebliebene Teil durch die nur aus einer schwarzen Druckfarbe gebildeten Grauabschattungen gedruckt wird.

2. Schutzelement nach Anspruch 1, **dadurch gekennzeichnet, dass** es in dem sichtbaren Teil des Spektrums als ein aus einer Skala von verschiedenen Graustufen zusammengesetztes Muster erscheint, während in dem IR-Bereich des Spektrums die Druckfelder einen anderen Verlauf der Absorption aufweisen.

3. Schutzelement nach einem der Ansprüche 1 oder 2, **dadurch gekennzeichnet, dass** die einzelnen Druckfelder eine geometrische Form von Viereck, Rechteck, Dreieck oder eine andere Form aufweisen.

4. Schutzelement nach einem der Ansprüche 1 bis 3, **dadurch gekennzeichnet, dass** die einzelnen Druckfelder verschiedene Größen aufweisen.

5. Schutzelement nach einem der Ansprüche 1 bis 4, **dadurch gekennzeichnet, dass** es aus einer beliebigen Anzahl von Druckfeldern besteht.

6. Schutzelement nach einem der Ansprüche 1 bis 5, **dadurch gekennzeichnet, dass** die Kombination der beiden Verfahren zur Herstellung der Graustufen außer verschiedener Mosaiken und Muster auch verborgene Texte und andere gewünschte Muster bildet.

7. Schutzelement nach einem der Ansprüche 1 bis 6, **dadurch gekennzeichnet, dass** es aus mindestens zwei Teilen besteht, die durch zwei auf eine unterschiedliche Weise hergestellte Graustufen gedruckt werden.

8. Schutzelement nach einem der Ansprüche 1 bis 7, **dadurch gekennzeichnet, dass** es zugleich mit dem Hauptdruck der gewünschten Druckschrift gedruckt wird.

9. Schutzelement nach einem der Ansprüche 1 bis 8, **dadurch gekennzeichnet, dass** es mittels der digitalen und/oder konventionellen Techniken gedruckt wird.
